# EUROPEAN PATENT SPECIFICATION

(11) **EP 1 179 956 B1**
(45) Date of publication and mention of the grant of the patent: **04.04.2007**
(21) Application number: 00204669.6
(22) Date of filing: 19.12.2000
(51) Int. Cl.: H04N 1/00

(54) **Scanner having a vertical rest position**
Datenlesegerät mit vertikaler Stauposition
Scanner à position de repos verticale

(30) Priority: 17.07.2000 EP 00202552
(43) Date of publication of application: 13.02.2002
(73) Proprietor: Agfa Graphics N.V., 2640 Mortsel (BE)
(72) Inventor: Debusschere, Bavo, c/o Agfa-Gevaert N.V., 2640 Mortsel (BE); Rubner, Karl Heinz, 7321 Durnau (DE)
(74) Representative: Goedeweeck, Rudi

(56) References cited:
- EP-A- 0 959 611
- US-A- 4 611 246
- US-A- 4 750 047

## Description

### FIELD OF THE INVENTION

The present invention relates to the field of image scanning systems, and in particular to a flatbed desktop scanner.

### BACKGROUND OF THE INVENTION

A flatbed desktop scanner as known in the art, such as the Agfa SnapScan^{™} 1212p, contains a substantially rectangular base portion and a document lid. The base portion rests on the desk. A photo, a printed image or another object is positioned on the base portion, the document lid is closed and the object is scanned. The digital data obtained from the scan can then be processed by a computer, can be printed, can be sent over a network such as the Internet, etc.

A disadvantage of such a conventional scanner is that it requires quite some desk space, even when not in use - very often, a scanner is used only part of the time. Moreover, the scanner is usually connected to a computer that stands on the same desk and this computer often has other peripheral equipment, such as a printer. Such a combination of a computer and its peripheral equipment requires much space, and therefore it is important to save desk space.

EP-A-0 959 611 describes a scanner which can be opened for operation like a notebook.

### OBJECTS OF THE INVENTION

It is therefore an object of the present invention to provide a scanner that requires less desk space.

### SUMMARY OF THE INVENTION

The above-mentioned objects are realised by a scanner as claimed in claim 1. The dependent claims set out preferred embodiments of the invention.

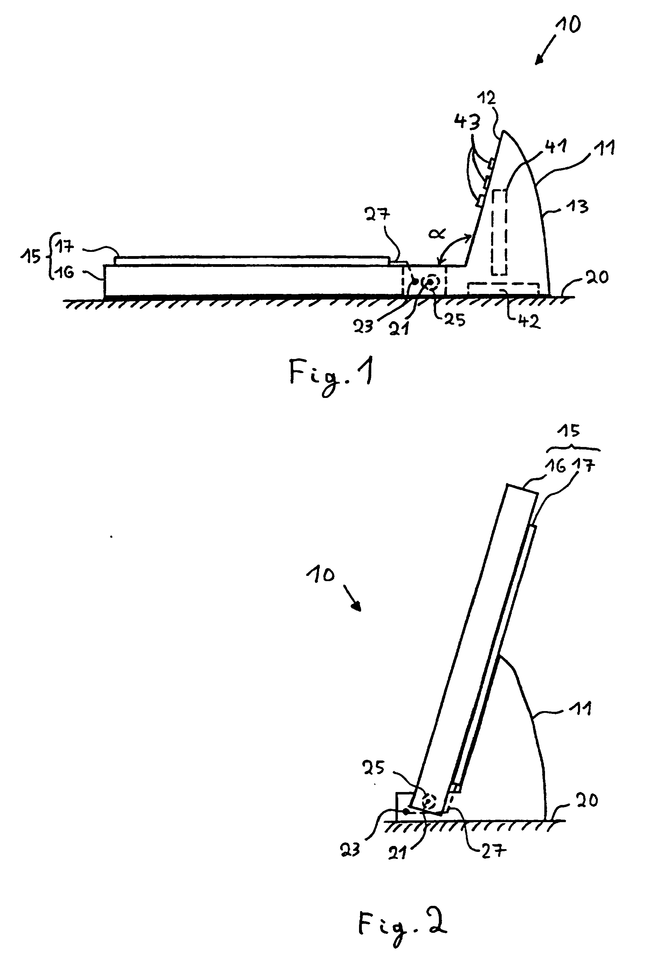

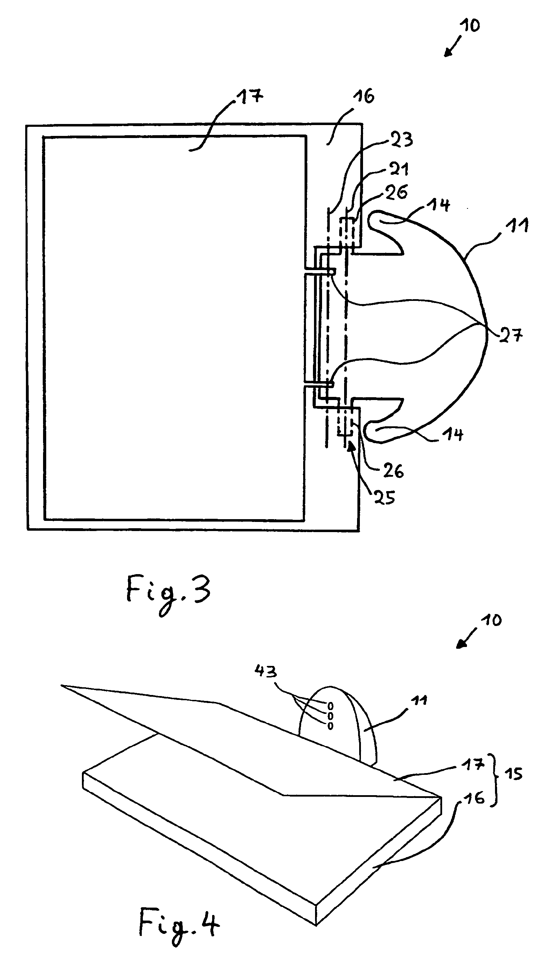

Figs. 1 to 4 illustrate a first embodiment of a scanner 10 in accordance with the invention. As shown in Fig. 4, the scanner 10 contains a chassis 11 and a body 15. The body 15 may contain a base portion 16, to support the document that is to be scanned, and a document lid 17, to cover the document in order to avoid the influence of ambient light during scanning. The body 15 is movably connected to the chassis 11 so that it can be moved from a substantially horizontal operative position, wherein the body 15 is supported by the desk 20 as shown in Fig. 1, to a substantially vertical rest position, as shown in Fig. 2. In the substantially vertical rest position, the scanner requires much less desk space; the gain of desk space can amount to more than 50 %, even to more than 60 % in a preferred embodiment.

When the scanner 10 is not in use, the body 15 is preferably in its substantially vertical rest position, as shown in Fig. 2. To operate the scanner, the body 15 is then moved from the substantially vertical rest position to the substantially horizontal operative position, which is illustrated by Fig. 1. If no documents have to be scanned for some time, the user preferably returns the body 15 to its substantially vertical rest position, in order to save desk space. Of course, the user may also choose to keep the body 15 in its substantially horizontal operative position for an arbitrary length of time.

In a particular embodiment of the invention, documents may not only be scanned in the substantially horizontal operative position (shown in Fig. 1) but also in the substantially vertical rest position (shown in Fig. 2). In this particular embodiment, the scanner 10 includes means to hold the document in its substantially vertical position, against gravity, while it is scanned. Such holding means may make use of electrostatic attraction - e.g. for paper documents - or other means as known in the art may be used.

Further advantages and embodiments of the present invention will become apparent from the following description and drawings.

### BRIEF DESCRIPTION OF THE DRAWINGS

The invention is described with reference to the following drawings without the intention to limit the invention thereto, and in which:
Fig. 1 is a side view of a first embodiment of a scanner in accordance with the invention; the scanner is in its substantially horizontal operative position;
Fig. 2 is a side view of the scanner of Fig. 1 in its substantially vertical rest position;
Fig. 3 is a top view of the scanner of Fig. 1 in its substantially horizontal operative position;
Fig. 4 is a schematic perspective view of a scanner according to the invention;
Fig. 5 is a side view of a second embodiment of a scanner in accordance with the invention.

### DETAILED DESCRIPTION OF THE INVENTION

In a first embodiment, shown in Figs. 1 to 3, the base portion 16 is pivotally connected to the chassis 11 by connection means 25, so that the base portion 16 can pivot around axis 21. Fig. 3 shows a specific embodiment of the connection means 25: two pins 26, which are part of the chassis 11, and two corresponding openings in the base portion 16. Of course any other connection means 25 as known in the art may be used.

In the embodiment of Figs. 1 to 3, the document lid 17 is pivotally connected to the chassis 11 so that it can pivot around axis 23. The connection is realised in the embodiment of Figs. 1 to 3 by two elements 27 that have the shape of an oblique L; other connection means as known in the art may be also used.

When moving the body 15 from its substantially horizontal operative position, shown in Fig. 1, to its substantially vertical position, shown in Fig. 2, the base portion 16 pivots around axis 21 and the document lid 17 pivots around axis 23, until both the base portion 16 and the document lid 17 rest against the chassis 11.

In a preferred embodiment of the invention, axis 23 coincides with axis 21 so that the base portion 16 and the document lid 17 pivot around the same axis. This has the advantage that the document lid 17 does not move with respect to the base portion 16 when moving the body between its substantially horizontal operative position and its substantially vertical rest position.

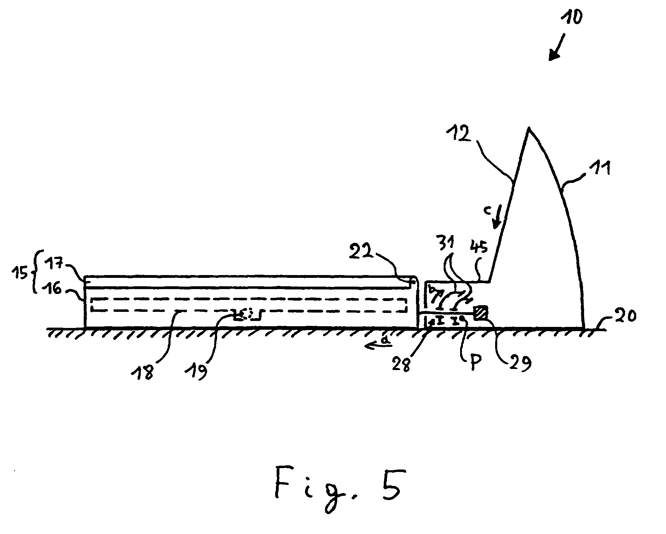

In another embodiment, shown in Fig. 5, the document lid 17 is not connected to the chassis 11 but instead is pivotally connected to the base portion 16, so that it can pivot around an axis 22.

In the substantially vertical rest position, the body 15 makes an angle α with the substantially horizontal plane of the desk 20 that is preferably between 60° and 120°. More preferably, the front side 12 of the chassis 11, which is the side turned towards the body 15, is inclined slightly backwards, as shown in Fig. 1, so that the angle α is between 90° and 120°; most preferably a is between 95° and 115°. Such an angle ensures good stability of the body 15 in the substantially vertical rest position.

It is preferred that the chassis 11 contains at least a portion of the electronic hardware 41 for operating the scanner. This is advantageous since the body 15, not containing this hardware, then weighs less and is therefore easier to move. The chassis 11 may contain the electronics main board and may have, preferably on its back side 13 which is the side turned away from body 15, a connector for both data-transmission and power. The chassis 11 may have two feet 14 to enlarge stability of the scanner 10 in the substantially vertical rest position. Preferably, a weight 42 is put near the bottom of the chassis 11 to enlarge stability even more.

The user interface of the scanner is preferably contained at least partly in the chassis 11. Advantages are that the user interface is located near the electronic hardware 41, so that the electrical connections between the user interface and the electronic hardware may be short, and that the body 15 may have a simple construction and may weigh less. The user interface may comprise one or more buttons 43, which can be pushed to operate the scanner. As shown in Figs. 1 and 4, the pushbuttons 43 may be located on the front side 12 of the chassis 11.

The base portion 16 may contain, as known in the art, a scan-carriage, a sensor and a glass plate, upon which the document is put that will be scanned. Preferably, as shown in Fig. 5, the scan-carriage 18 is guided by a single guide rail 19 that occupies a substantially central position in the base portion 16. The document lid 17 preferably has low weight and high stiffness, which can be achieved by known mechanical construction techniques.

Fig. 5 illustrates a second embodiment of the invention wherein the body 15 is not pivotally connected to the chassis 11, as is the case in the first embodiment that was discussed with reference to Figs. 1 to 3. Instead, as shown schematically in Fig. 5, body 15 is movably connected to chassis 11 by a sliding joint 28 that can itself perform a substantially rotational movement. To move body 15 from its substantially horizontal operative position (shown in Fig. 5) to its substantially vertical rest position, the user may proceed as follows. First he pulls body 15 away from chassis 11 in the sense of arrow a, until stop 29 arrives at position P. Then he lifts body 15 and rotates it in the sense of arrow b until document lid 17 rests against the front side 12 of chassis 11; during this movement, sliding joint 28 may move in a set of grooves 31. Finally, the user may lower body 15 in the sense of arrow c, so that body 15 rests against face 45 of chassis 11.

Having described in detail preferred embodiments of the current invention, it will now be apparent to those skilled in the art that numerous modifications can be made therein without departing from the scope of the invention as defined in the appending claims.

### List of reference signs

- 10 :: scanner
- 11 :: chassis
- 12 :: front side
- 13 :: back side
- 14 :: foot
- 15 :: body
- 16 :: base portion
- 17 :: document lid
- 18 :: scan-carriage
- 19 :: guide rail
- 20 :: desk
- 21 :: first axis
- 22 :: second axis
- 23 :: third axis
- 25 :: connection element
- 26 :: pin
- 27 :: connection element
- 28 :: sliding joint
- 29 :: stop
- 31 :: groove
- 41 :: electronic hardware
- 42 :: weight
- 43 :: pushbutton
- 45 :: face
- α :: angle
- P :: position
- a,b,c:: arrows

## Claims

1. A scanner (10) comprising:
- a chassis (11) comprising a first and a second surface; and
- a body (15) comprising a sensor;
- said body being pivotally attached to said chassis so that it can move between a first operative position substantially parallel to said first surface, and a second resting position resting against said second surface;
said scanner **characterized in that**:
- said first and second surface are inclined at a fixed angle between 90 and 120 degrees.

2. The scanner (10) according to claim 1 wherein the body (15) comprises a base portion (16) and a document lid (17) and wherein the base portion (16) is pivotally connected to the chassis (11) for pivoting around a first axis (21).

3. The scanner (10) according to any one of claims 1 to 2 wherein the document lid (17) is pivotally connected to the base portion (16) for pivoting around a second axis (22).

4. The scanner (10) according to any one of claims 1 to 2 wherein the document lid (17) is pivotally connected to the chassis (11) for pivoting around a third axis (23).

5. The scanner (10) according to claim 4 when dependent on claim 2 wherein the third axis (23) coincides with the first axis (21).

6. The scanner (10) according to any one of the preceding claims wherein the chassis (11) comprises electronic hardware (41) for operating the scanner (10).

7. The scanner (10) according to any one of the preceding claims, wherein the scanner (10) has a user interface (43) and wherein the chassis (11) comprises at least a portion of the user interface (43).

8. The scanner (10) according to the preceding claim wherein the user interface (43) comprises at least one pushbutton (43).

## Patentansprüche

1. Datenlesegerät (10) mit Folgendem:
- einem Gehäuse (11) mit einer ersten und einer zweiten Fläche und
- einem Körper (15) mit einem Sensor,
- wobei der Körper schwenkbar so an dem Gehäuse angebracht ist, dass er sich zwischen einer im Wesentlichen zu der ersten Fläche parallelen ersten Betriebsposition und einer zweiten Ruheposition, in der er an der zweiten Fläche anliegt, bewegen kann,
**dadurch gekennzeichnet, dass**
- die erste und die zweite Fläche in einem festen Winkel zwischen 90 und 120 Grad geneigt sind.

2. Datenlesegerät (10) nach Anspruch 1, wobei der Körper (15) einen Basisabschnitt (16) und einen Dokumentendeckel (17) umfasst und wobei der Basisabschnitt (16) zum Schwenken um eine erste Achse (21) schwenkbar mit dem Gehäuse (11) verbunden ist.

3. Datenlesegerät (10) nach Anspruch 1 oder 2, wobei der Dokumentendeckel (17) zum Schwenken um eine zweite Achse (22) schwenkbar mit dem Basisabschnitt (16) verbunden ist.

4. Datenlesegerät (10) nach Anspruch 1 oder 2, wobei der Dokumentendeckel (17) zum Schwenken um eine dritte Achse (23) schwenkbar mit dem Gehäuse (11) verbunden ist.

5. Datenlesegerät (10) nach Anspruch 4, wenn dieser von Anspruch 2 abhängig ist, wobei die dritte Achse (23) mit der ersten Achse (21) zusammenfällt.

6. Datenlesegerät (10) nach einem der vorhergehenden Ansprüche, wobei das Gehäuse (11) elektronische Hardware (41) zum Betreiben des Datenlesegeräts (10) umfasst.

7. Datenlesegerät (10) nach einem der vorhergehenden Ansprüche, wobei das Datenlesegerät (10) eine Benutzerschnittstelle (43) hat und wobei das Gehäuse (11) mindestens einen Teil der Benutzerschnittstelle (43) umfasst.

8. Datenlesegerät (10) nach dem vorhergehenden Anspruch, wobei die Benutzerschnittstelle (43) mindestens eine Drucktaste (43) umfasst.

## Revendications

1. Scanner (10) comprenant :
- un châssis (11) comprenant une première et une deuxième surfaces ; et
- un corps (15) comprenant un capteur ;
- ledit corps étant rattaché de façon pivotante audit châssis de sorte qu'il peut se déplacer entre une première position opérationnelle substantiellement parallèle à ladite première surface, et une deuxième position de repos reposant contre ladite deuxième surface ;
ledit scanner étant **caractérisé en ce que** :
- lesdites première et deuxième surfaces sont inclinées sous un angle fixe entre 90 et 120 degrés.

2. Scanner (10) selon la revendication 1, dans lequel le corps (15) comprend une partie de base (16) et un couvercle de document (17), et dans lequel une partie de base (16) est reliée de façon pivotante au châssis (11) pour pivoter autour d'un premier axe (21).

3. Scanner (10) selon l'une quelconque des revendications 1 à 2, dans lequel le couvercle de document (17) est relié de façon pivotante à la partie de base (16) pour pivoter autour d'un deuxième axe (22).

4. Scanner (10) selon l'une quelconque des revendications 1 à 2, dans lequel le couvercle de document (17) est relié de façon pivotante au châssis (11) pour pivoter autour d'un troisième axe (23).

5. Scanner (10) selon la revendication 4 lorsque qu'elle dépend de la revendication 2, dans lequel le troisième axe (23) coïncide avec le premier axe (21).

6. Scanner (10) selon l'une quelconque des revendications précédentes, dans lequel le châssis (11) comprend du matériel électronique (41) pour utiliser le scanner (10).

7. Scanner (10) selon l'une quelconque des revendications précédentes, dans lequel le scanner (10) présente une interface utilisateur (43), et dans lequel le châssis (11) comprend au moins une partie de l'interface utilisateur (43).

8. Scanner (10) selon la revendication précédente, dans lequel l'interface utilisateur (43) comprend au moins un bouton-poussoir (43).
